# EUROPÄISCHE PATENTSCHRIFT

(11) **EP 2 693 098 B1**
(45) Veröffentlichungstag und Bekanntmachung des Hinweises auf die Patenterteilung: **29.06.2016**
(21) Anmeldenummer: 13177402.8
(22) Anmeldetag: 22.07.2013
(51) Int. Cl.: F16M 11/10, F16C 11/10, G10D 13/06

(54) **Schrägsteller für einen Ständer, insbesondere einen Beckenständer**
Tilter for a stand, in particular a basin stand
Dispositif d'inclinaison pour un support, notamment un support de cymbale

(30) Priorität: 02.08.2012 DE 102012213740
(43) Veröffentlichungstag der Anmeldung: 05.02.2014
(73) Patentinhaber: GEWA Music GmbH, 08626 Adorf (DE)
(72) Erfinder: Steinhauser, Ruben, 87452 Altusried (DE); Holl, Winfried, 89257 Illertissen-Au (DE)
(74) Vertreter: Daub, Thomas

(56) Entgegenhaltungen:
- US-A- 4 363 561
- US-B1- 6 268 556
- US-B1- 7 663 040

## Beschreibung

Die vorliegende Erfindung betrifft einen Schrägsteller, insbesondere einen Schrägsteller für ein Becken zur Befestigung an einem Beckenständer, gemäß dem Oberbegriff des Anspruchs 1.

Das Schrägstellen eines Schlagzeugbeckens ist wichtig zur individuellen Positionierung für einen Schlagzeuger zum Ermöglichen einer idealen Anspielposition des Beckens. Dazu benötigt jeder Beckenständer einen Schrägsteller, der die Neigung des Beckens zum Spieler einstellen lässt und fixiert. Dabei ist es zudem wichtig, dass die Position des Beckens während des Spielens ebenfalls zuverlässig erhalten bleibt.

Um dies zu ermöglichen sind Schrägsteller bekannt, die, aufgrund der hohen dynamischen Lasten, sowohl form- als auch kraftschlüssige konzentrische und verdrehbare Verbindungen, so genannte Zahnsegmentschrägsteller, realisiert haben. Durch das Eingreifen der Bauteile mittels der Zahnsegmente ineinander war es jedoch mit diesen Systemen nicht möglich, stufenlose Einstellungen vorzunehmen.

Da stufenlose Einstellungen jedoch einen höheren Freiheitsgrad bei der Anordnung der Instrumente bieten, wurden Systeme entwickelt, die dieses Problem lösen sollen. US 7,385,127 stellt ein System mit Reibscheiben vor, die durch eine Verschlusskraft ähnlich einer Kupplung zusammen gedrückt werden und so durch den Reibkontakt eine Fixierung eines bewegbaren Bauteils des Schrägstellers erreichen sollen. Zudem sind andere Lösungen bekannt, die beispielsweise ähnlich einem Brems- oder auch Trommelbremsbackensystem eingesetzt werden.

Die Herstellung derartiger Systeme ist aufgrund der komplexeren Technik häufig schwierig und teuer. Zudem kann durch die standardmäßige Verwendung von Metallelementen ein Durchrutschen der Haltevorrichtung, gerade bei hohen mechanischen Belastungen während des Spielens, nur bedingt verhindert werden.

US 7,663,040 B1 offenbart einen Schrägsteller mit den Merkmalen des Oberbegriffs von Anspruch 1. Weitere Schrägsteller sind aus der US 4,363,561 und der US 6,268,556, B1 bekannt.

Es ist daher eine Aufgabe der Erfindung, wenigstens einen der oben genannten Nachteile zu umgehen und einen Schrägsteller zur Verfügung zu stellen, der einfach herzustellen ist und einen zuverlässigen Halt bietet.

Diese Aufgabe wird erfindungsgemäß mit einem Schrägsteller gemäß Anspruch 1 gelöst. Vorteilhafte Weiterbildungen sind Gegenstand der Unteransprüche.

Ein erfindungsgemäßer Schrägsteller, insbesondere ein Schrägsteller für ein Becken zur Befestigung an einem Beckenständer, weist zwei Bauteile, ein Schrägstellelement, auch bezeichnet als Beckenschale, und ein Befestigungselement, auch bezeichnet als Hauptschale, auf. Das Schrägstellelement und das Befestigungselement sind relativ zueinander bewegbar. Dabei ist das Befestigungselement dazu vorgesehen, an einem Ständer, beispielsweise einem Beckenständer, befestigt zu werden. Das Schrägstellelement ist über ein Verbindungselement mit dem Befestigungselement verbunden. In einer bevorzugten Ausführungsform ist das Verbindungselement ein Bolzen, der sich durch das Befestigungselement und das Schrägstellelement erstreckt, und um den das Schrägstellelement rotierbar angeordnet ist.

Zudem ist vorzugsweise ein Feststellelement vorgesehen, zum reversiblen Fixieren des Schrägstellelements relativ zu dem Befestigungselement. In der bevorzugten Ausführungsform ist das Feststellelement als eine Mutter, insbesondere eine Flügelmutter, ausgebildet. Das Feststellelement kann dabei auch an dem Befestigungselement vorgesehen sein. Dabei ist das Feststellelement derart angeordnet, dass der Abstand zwischen dem Schrägstellelement und dem Befestigungselement verringert wird. Zwischen dem Befestigungselement und dem Schrägstellelement ist ein Reibmittel vorgesehen. Das Reibmittel ist derart ausgebildet, dass es in einer fixierten Position des Schrägstellers mit einer Umfangsfläche, insbesondere mit einer inneren Umfangsfläche, des Schrägstellelements und/oder des Befestigungselements in Reibkontakt ist. Die Umfangsfläche liegt dabei in radialer Richtung ausgehend von dem Verbindungsmittel vorgesehen. Auf diese Weise kann eine größere Reibfläche zwischen den bewegbaren Komponenten erzeugt werden und eine stabilere Halterung erreicht werden.

Die Befestigung des Schrägstellers an dem Ständer kann durch Aufnahme einer Strebe des Ständers in einem Aufnahmemittel geschehen. Es sind jedoch auch verschiedene andere Weisen möglich, wie dem Fachmann ohne weiteres bekannt ist. Analog dazu kann eine Befestigung von Streben oder direkt eines Instruments an dem Schrägstellelement erfolgen.

In einer bevorzugten Ausführungsform weist also der Schrägsteller zum Einen eine Hauptschale auf, die ein Aufnahmemittel für eine Stange und ein Feststellmittel hat; zum Anderen weist der Schrägsteller eine Beckenschale auf, die ein Aufnahmemittel für ein Becken oder eine Beckenstange hat.

Der innere, also achsnahe, Aufbau, insbesondere hinsichtlich der inneren Dimensionen der Schalen, d.h., des Schrägstellmittels und des Befestigungsmittels, bzw. hinsichtlich des zwischen den Schalen angeordneten Verbindungsmittels kann baugleich, vorzugsweise symmetrisch, zueinander ausgebildet sein.

Auf diese Weise ist es auch möglich, einen Schrägsteller zur Verfügung zu stellen, der zwei Hauptschalen aufweist, die einander gegenüberliegend vorgesehen sind. Damit können zwei Streben in einem beliebigen Winkel zueinander angeordnet werden. Dabei können natürlich insbesondere auch beide Hauptschalen so ausgebildet sein, dass das Feststellmittel, das an dem Verbindungsmittel vorgesehen ist, beidseits arretiert werden kann, so dass eine stufenlose Verschiebung und Arretierung der aufgenommenen Stangen möglich ist. Auch kann an beiden Schalen eine Befestigung für aufzunehmende Stangen möglich sein, wie später noch beispielhaft für das Befestigungselement beschrieben wird.

Diese Weiterbildungen sind gleichermaßen auch auf die im Folgenden noch zu beschreibenden Ausführungsformen der Erfindung anwendbar.

Das Reibmittel kann elastisch verformbar sein. Insbesondere kann das Reibmittel derart ausgebildet sein, dass eine axiale Kraft, also eine Kraft die in Richtung der Kraftwirkung des Feststellmittels beim Fixieren wirkt, eine radiale Expansion des gesamten Reibmittels oder zumindest eines Teils davon, mit sich bringt. Diese Expansion ist je nach geometrischer Ausbildung und Materialwahl des Reibmittels konzentrisch. Obgleich die wirkende Kraft eine Kompressionskraft auf das Reibmittel ist, ist das Reibmittel selbst vorzugsweise zwar elastisch, jedoch nicht oder nur in geringem Maße kompressibel. Dadurch kann wiederum ein besserer Kraftschluss an den Kontaktbereichen der bewegbaren Elemente erreicht werden. Natürlich kann das Reibmittel auch kompressibel sein, je nachdem, welche Eigenschaften von dem Reibmittel im Speziellen gefordert sind.

Dabei sind die elastischen Eigenschaften des Reibmittels vorzugsweise so gewählt, dass die durch eine kraftinduzierte Verformung reversibel ist und das Reibmittel nach Lösen der Kraft wieder die ursprüngliche, unverformte Gestalt annimmt.

Das Reibmittel weist mehrere Reibscheiben auf. Diese können alle dieselben mechanischen Eigenschaften, hinsichtlich Elastizität, Kompressibilität, etc. aufweisen, oder verschiedenartig ausgebildet sein.

In einer bevorzugten Ausführungsform weist das Reibmittel drei Reibscheiben auf, die nebeneinander, insbesondere koaxial, angeordnet sind. Dabei kann eine Scheibe, insbesondere die mittlere, auch als starre, unverformbare Scheibe ausgebildet sein. Dadurch kann wiederum eine größere Kraftübertragung auf die angrenzenden Scheiben erfolgen. Zudem können die Scheiben gleiche oder verschiedene Dicken aufweisen. So dass die Scheiben auch als Distanzscheiben verwendbar sind, ohne einen Funktionsverlust für den Schrägsteller zu bedeuten.

Während in der bevorzugten Ausführungsform das Reibmittel ein separates, frei bewegliches Bauteil ist, sind Ausführungsformen denkbar, in denen eine Reibscheibe mit dem Feststellelement und/oder dem Befestigungselement an einer Stirnfläche bzw. an dem Verbindungsmittel befestigt ist.

Weiterhin kann in dem Befestigungselement und/oder in dem Schrägstellelement ein Drängmittel vorgesehen sein, mit dem eine zumindest teilweise in dem entsprechenden Schrägstell-/ bzw. Befestigungsmittel aufgenommene Reibscheibe in Richtung des gegenüberliegenden Befestigungs-/ bzw. Schrägstellmittels gedrängt werden kann. Dieses Drängmittel kann ortsfest oder bewegbar gelagert sein.

Weiterhin wird bevorzugt, dass das Verbindungsmittel von dem Schrägstellelement, dem Befestigungselement und dem Reibmittel radial, insbesondere konzentrisch, umschlossen wird. So ist eine Rotation des Schrägstellelements um das Verbindungsmittel möglich, während das Reibmittel die angedachte Funktion zum Herstellen eines Reibkontakts mit einer Umfangsfläche des Schrägstellelements bzw. des Befestigungselements unbeeinflusst erfüllen kann.

In einer bevorzugten Weiterentwicklung der Erfindung weist das Reibmittel ein thermoplastisches Elastormermaterial auf. Das Reibmittel kann ganz aus diesem Material hergestellt sein. Dadurch können sich die Herstellungskosten verringern. Auch kann das Reibmittel nur teilweise, beispielsweise in Form einer Beschichtung, aus dem Elastomermaterial hergestellt werden. So können auf den individuellen Einsatz abgestimmte Eigenschaften des Reibmittels und folglich des Schrägstellers erreicht werden. Dabei kommt als Material jede Gummimischung in Frage. Insbesondere kann beispielsweise Silikon, Naturkautschuk oder eine Gummimischung mit 80 Shore A verwendet werden.

Zudem kann das Reibmittel, und damit auch die Reibscheiben und/oder das Schrägstellelement bzw. das Befestigungselement zumindest teilweise an den Kontaktflächen miteinander ein Oberflächenprofil aufweisen. Dies kann insbesondere als eine Oberflächenrauhigkeit ausgebildet sein. So kann eine Haftung verbessert werden, wodurch ein festerer Sitz des Schrägstellelements erreicht werden kann.

Das Feststellelement ist in der bevorzugten Ausführungsform dabei eine Flügelmutter, die ein Gewinde aufweist, das mit einem Gegengewinde kompatibel ist, das an dem Verbindungsmittel vorgesehen ist.

Es ist neben den obigen Ausführungen auch denkbar, dass das Verbindungsmittel nicht als ein Bolzen ausgebildet ist, sondern beispielsweise ein das Befestigungselement, das Schrägstellelement und das Reibmittel umfassendes Verbindungsmittel ist, ohne sich von dem erfindungsgemäßen Gedanken zu entfernen. Auch kann es sich um ein Feder-gehaltenes Mittel handeln, wobei eine Feder eine Kraft auf das Reibmittel ausübt.

Durch die Flexibilität der Reibmittel können vorteilhafter Weise materialverschleißende, zerstörerisch auf die zu haltenden Instrumente wirkende Vibrationen absorbiert werden. Einzelheiten, weitere Vorteile und Weiterentwicklungen der Erfindung werden anhand von Ausführungsbeispielen unter Bezugnahme auf die Zeichnungen näher erläutert. Dabei zeigt:
Fig. 1 eine perspektivische Frontansicht eines erfindungsgemäßen Schrägstellers gemäß einer bevorzugten Ausführungsform;
Fig. 2 eine perspektivische Rückansicht des Schrägstellers der bevorzugten Ausführungsform;
Fig. 3 eine perspektivische Frontansicht das Befestigungselements des Schrägstellers der bevorzugten Ausführungsform;
Fig. 4 eine perspektivische Frontansicht des Befestigungselements der bevorzugten Ausführungsform mit einer Reibscheibe;
Fig. 5 eine perspektivische Rückansicht des Schrägstellelements der bevorzugten Ausführungsform;
Fig. 6 eine perspektivische Ansicht des Verbindungsmittels des Schrägstellelements der bevorzugten Ausführungsform mit Reibscheiben;
Fig. 7 die Reibscheiben aus Fig. 6, auf die eine axiale Kraft wirkt.

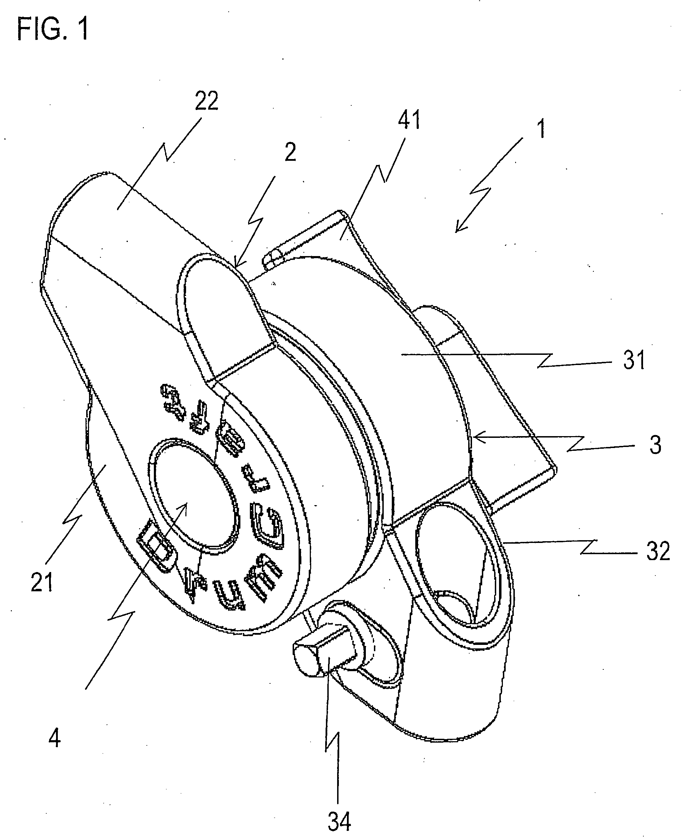

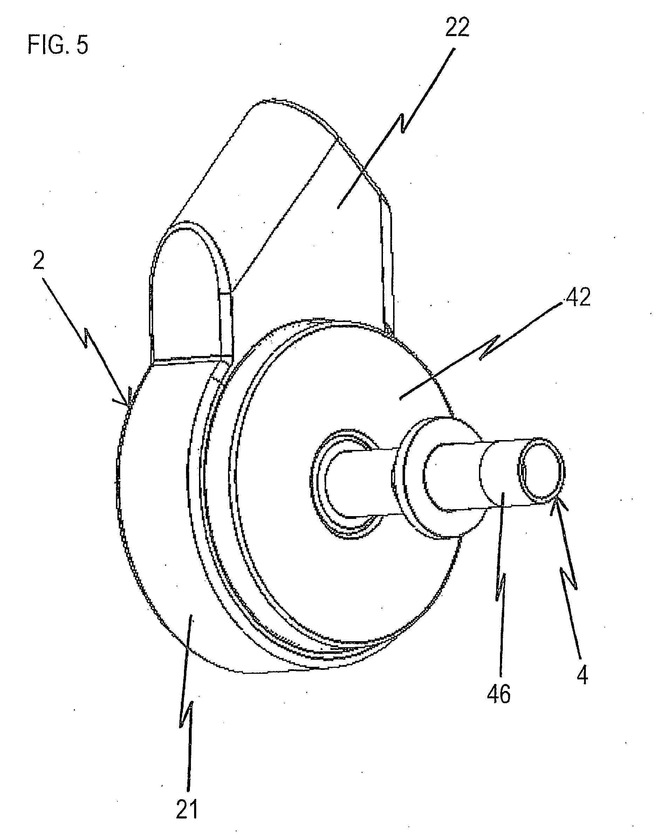

Fig. 1 zeigt einen erfindungsgemäßen Schrägsteller 1 gemäß einer bevorzugten Ausführungsform. Der Schrägsteller 1 besteht im Wesentlichen aus einem Schrägstellelement 2 und einem Befestigungselement 3. Das Schrägstellelement 2 besteht dabei wiederum aus zwei Komponenten, die vorliegend einstückig, jedoch auch zweistückig ausgebildet sein können. Die erste Komponente ist die Druckschale 21. Die Druckschale 21 ist im Wesentlichen flachzylindrisch ausgebildet. Eine Stirnseite der Druckschale ist dabei geschlossen, wie in Fig. 1 zu erkennen ist. Wie aus Fig. 5 deutlich wird, ist die andere Stirnseite des gedachten Zylinders offen, so dass die Druckschale 21 als ein Hohlkörper ausgebildet ist.

Eine zweite Komponente des Schrägstellelements 2 ist eine Instrumentenaufnahme 22. Die Instrumentenaufnahme 22 dient zur Aufnahme eines Instruments, einer Strebe zur Befestigung eines Instruments oder Ähnlichem, was mit dem Schrägsteller 1 gekoppelt werden soll. In der bevorzugten Ausführungsform ist die Instrumentenaufnahme 22 in ihrer Grundform ebenfalls hohlzylinderförmig ausgebildet, wobei eine Stirnseite des Zylinders geöffnet und die andere Stirnseite geschlossen ist. Als Stirnseiten werden hier die die Zylindermantelfläche begrenzenden Flächen bezeichnet, also der Boden und der Deckel eines Zylinders.

Alternativ könnten natürlich auch beide Stirnseiten geöffnet sein. Die Instrumentenaufnahme 22 erstreckt sich in einer tangentialen Richtung weg von einer Umfangsfläche der Druckschale 21. Dabei ist eine Zylinderhauptachse der Instrumentaufnahme 21 (nicht gezeigt) vorliegend orthogonal zu einer Zylinderhauptachse der Druckschale. Der Hohlraum der Instrumentenaufnahme 22 ist derart ausgebildet, dass ein mit dem Schrägsteller 1 zu koppelndes Bauelement aufgenommen werden kann.

In der Druckschale ist in der hier gezeigten Ausführungsform zentral eine Öffnung vorgesehen, die derart ausgebildet ist, dass sie von einem später beschriebenen Verbindungsmittel 4 durchragt werden kann. Die Druckschale 21 ist drehbar um dieses Verbindungsmittel 4 ausgebildet.

Das Befestigungselement 3 des Schrägstellers 1 weist ähnliche konstruktive Ausgestaltung auf, wie das oben beschriebene Schrägstellelement 2. Das bedeutet, das Befestigungselement 3 hat ebenfalls eine in ihrer Grundform zylinderförmige Druckschale 31, sowie eine Aufnahme, hier eine Strebenaufnahme 32. Die Strebenaufnahme 2 dient zur Befestigung des Schrägstellers 1 an einer Strebe eines Ständers (nicht gezeigt), insbesondere eines Beckenständers. Die Strebenaufnahme 32 ist dabei ebenfalls derart an der Druckschale 31 ausgebildet, dass eine Strebe in einer tangentialen Richtung zu der Druckschale 31 aufgenommen wird. Die hohlzylindrisch ausgebildete Druckschale 31 ist an einer Stirnseite geschlossen, mit einer Öffnung zum Durchragen des Verbindungsmittels 4 ausgebildet. Die andere Stirnseite der Druckschale 31 ist geöffnet. Die Druckschale 31 ist ebenfalls rotierbar um das Verbindungsmittel 4 gelagert, so dass das Schrägstellelement 2 und das Befestigungselement 3 relativ zueinander verdrehbar sind. Zudem sind beide Bauteile in der vorliegenden Ausführungsform entlang des Verbindungsmittels 4 verschiebbar vorgesehen. In alternativen Ausführungsformen kann auch nur entweder das Schrägstellelement 2 oder das Befestigungselement 3 verschiebbar entlang des Verbindungsmittels 4 gelagert sein.

Es ist natürlich ebenfalls möglich, dass das Schrägstellelement 2 mit einer Strebe des Ständers gekoppelt wird, während das Befestigungsmittel 3 mit dem Instrument gekoppelt wird, ohne sich von dem Gedanken der Erfindung zu entfernen.

Die Instrumentenaufnahme 32 ist zudem mit einem Fixiermittel 34 ausgebildet, das zum Fixieren der Position des Schrägstellers 1 entlang des Ständers dient.

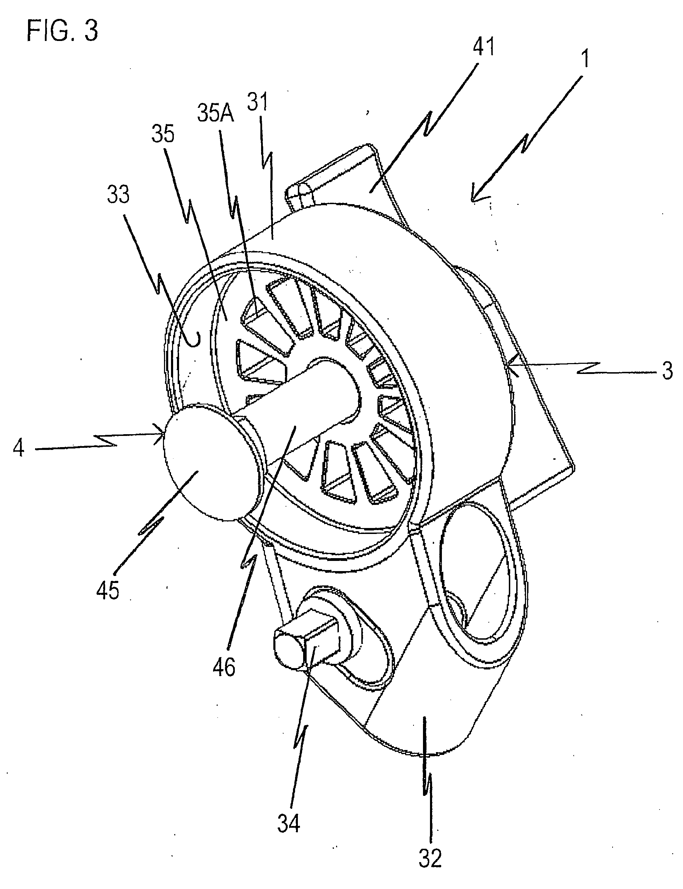

Die Druckschale 21 des Schrägstellelements 2 und die Druckschale 31 des Befestigungselements 3 sind über das Verbindungsmittel 4 miteinander verbunden. Wie aus Fig. 3 und Fig. 5 deutlich wird, ist das Verbindungsmittel 4 im Wesentlichen mit einem Kopfabschnitt 45 und einem Bolzenabschnitt 46 ausgebildet. Der Kopfabschnitt 45 des Verbindungsstücks 4 hat im Querschnitt einen größeren Radius als der Bolzenabschnitt 46. Der Radius des Bolzenabschnitts 46 und des Kopfabschnitts 45 ist so gewählt, dass der Bolzenabschnitt 46, nicht jedoch der Kopfabschnitt 45 des Verbindungsmittels durch die zentrale Öffnung zumindest der Druckschale 21 des Schrägstellelements 2 einbringbar ist. So kann der Kopfabschnitt 45 ein Widerlager an der Druckschale 21 bilden, wie später noch näher erläutert wird. Wie zudem aus Fig. 1 deutlich wird, ist die Öffnung der Druckschale 21 derart ausgebildet, dass der Kopfabschnitt 45 in der Druckschale 21 versenkt ist.

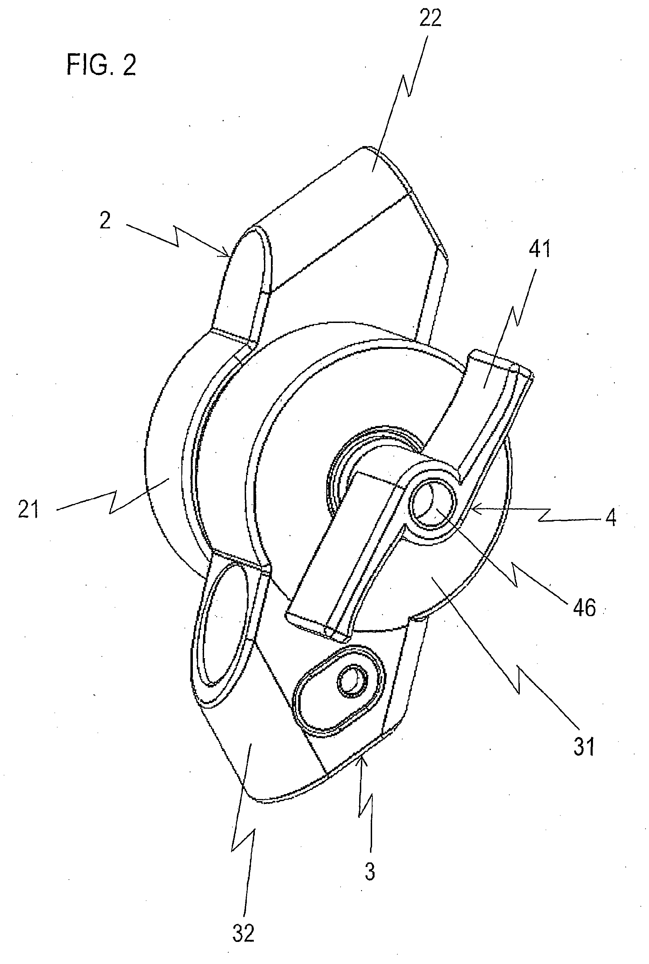

Das Verbindungsmittel 4 ist zudem an einem dem Kopfabschnitt 45 gegenüberliegenden Ende des Bolzenabschnitts 46 mit einem nicht gezeigten Gewinde ausgestattet. Wie Fig. 2 zu entnehmen ist, weist das Verbindungsmittel 4 zudem ein Befestigungsmittel, hier eine Flügelschraube 41, zum Fixieren der Position des Schrägstellers 1 auf. Natürlich können auch andere bekannte Verschlussmittel eingesetzt werden. Die Flügelschraube 41 ist in dem gezeigten Fall um das freie Ende des Bolzenabschnitts 46 angeordnet und weist ein dem dort vorgesehenen Gewinde entsprechendes Gegengewinde auf. So kann die Flügelschraube 41 auf den Bolzenabschnitt 46 aufgeschraubt werden.

Fig. 3 zeigt in perspektivischer Ansicht den Schrägsteller 1 ohne das Schrägstellelement 2. Wie zu erkennen ist, ist in der Druckschale 31 ein Drängmittel 35 vorgesehen. Das Drängmittel 35 ist parallel zu den Stirnseiten der Druckschale 31 ausgebildet und erstreckt sich durch den Hohlraum in der Druckschale 31. Das Drängmittel weist zudem Öffnungen 35A auf, die sich vorliegend keilförmig in einer radialen Richtung ausgehend vom Zentrum des Drängmittels 35 bis in die Umgebung dessen Umfangs erstrecken. Im Zentrum des Drängmittels 35 ist eine Öffnung zur Aufnahme des Bolzenabschnitts 46 des Verbindungsmittels 4 vorgesehen. Das Drängmittel 35 ist dabei ortsfest an einer inneren Umfangswand, auch bezeichnet als Druckschalenflanke der Druckschale 31 angeordnet. Die Befestigung des Drängmittels 35 kann beispielsweise durch Schweißen, Löten, Kleben oder Schrauben erfolgen. Auch kann es einstückig mit der Druckschale 31 ausgebildet sein. In anderen Ausführungsformen kann das Drängmittel 35 auch entlang des Verbindungsmittels 4 verschiebbar angeordnet sein. Weiterhin können die Öffnungen auch andere Form haben, oder gänzlich entfallen.

Analog zu dem Drängmittel 35 in der Druckschale 31 ist in der bevorzugten Ausführungsform auch in der Druckschale 21 des Schrägstellelements 2 ein hier nicht gezeigtes Drängmittel vorgesehen.

Es sind Ausführungsformen denkbar, in denen nur eine der Druckschalen 21, 31 ein entsprechendes Drängmittel aufweist.

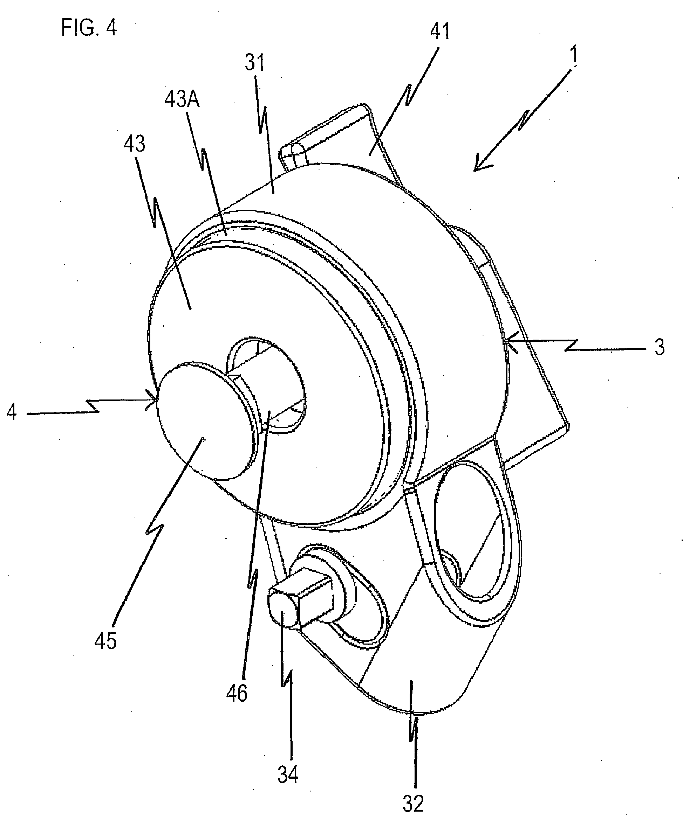

Weiterhin ist, wie in Fig. 4 gezeigt ist, um das Verbindungsmittel 4 eine Reibscheibe 43 vorgesehen. Die Umfangsform der Reibscheibe 43 entspricht der Form der Druckschale 31 bzw. der Druckschale 21. Die Reibscheibe 42, 43 ist also in der vorliegenden Ausführungsform kreisscheibenförmig ausgebildet. Der Radius der Reibscheibe 42, 43 ist dabei kleiner als der Innenradius des Hohlraums der Druckschale 31. Insbesondere ist der Radius der Reibscheibe so gewählt, dass eine Umfangsfläche 43A der Reibscheibe 43 in einem unbelasteten Zustand der Reibscheibe nicht mit der Druckschalenflanke eine Reibscheibe 42, die identisch zu der oben genannten Reibscheibe 43 ausgebildet ist, in der Druckschale 21 des Schrägstellelements 2 aufgenommen ist.

Für die obigen Beschreibungen gilt in den Ausführungsformen, in denen beide Druckschalen eine Reibscheibe aufnehmen sollen, dass die Druckschalen analog zueinander aufgebaut sind. Daneben sind Ausführungsformen denkbar, in denen lediglich eine Druckschale eine Reibscheibe aufnehmen soll, während die entsprechend andere Druckschale fest mit einer der Reibscheiben verbunden ist.

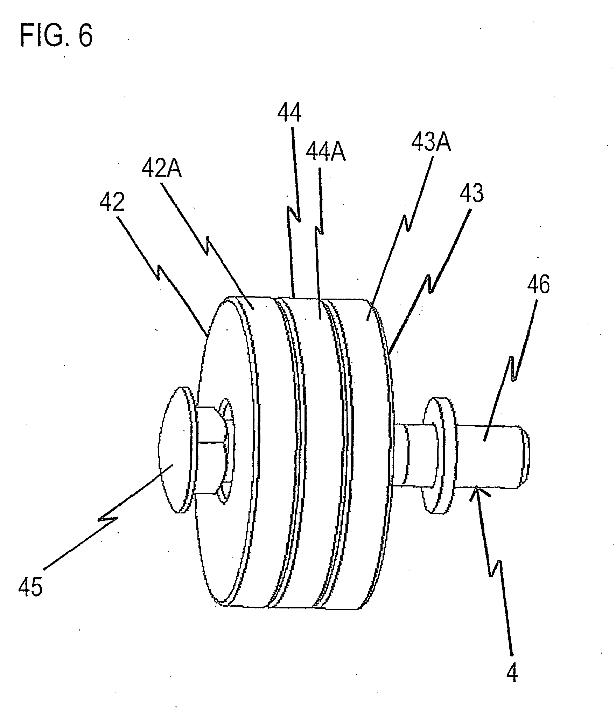

Das in Fig. 6 gezeigte Verbindungsmittel 4 ist insofern nur ein Beispiel für die bevorzugte Ausführungsform. Dabei sind drei identische Reibscheiben 42, 43, 44 vorgesehen, die in einer radialen Richtung um den Bolzenabschnitt 46 des Verbindungsmittels 4 angeordnet sind. Die Reibscheiben 42, 43, 44 haben dazu ein Durchgangsloch in einem zentralen Bereich zur Aufnahme des Verbindungsmittels 4.

Die Reibscheiben 42, 43, 44 bestehen vorzugsweise aus einem thermoplastischen Elastomermaterial. Dieses Elastomer weist derartige elastische Eigenschaften auf, dass sich eine Reibscheibe 42, 43, 44, die in einer axialen Richtung eine Kompressionskraft erfährt, in einer radialen Richtung, insbesondere konzentrisch, ausdehnt. Dabei ist der Radius der Reibscheiben 42, 43, 44 derart gewählt, dass sich die Umfangsflächen 42A, 43A, 44A in einem belasteten Zustand, also bei einer anliegenden Kraft auf die Seitenflächen der Reibscheiben 42, 43, 44 entsprechend der axialen Kraft, weiter in radialer Richtung erstrecken würden, als der Innenradius der Druckschale 21, 31. Somit ergibt sich ein direkter Kontakt der Umfangsflächen der Reibscheiben 42A, 43A, 44A mit der Druckschale 21, 31, insbesondere mit den Druckschalenflanken 33, wobei eine Reibkraft zwischen diesen Komponenten größer wird, je größer die Kraft auf die Reibscheibe 42, 43, 44 ist.

Es ist denkbar, dass in der Darstellung nach Fig. 6 eine Reibscheibe, beispielsweise die Reibscheibe 44, eine starre Scheibe ist, die sich bei Krafteinwirkung nicht verformt, und somit lediglich der Kraftkopplung dient.

Erfindungsgemäß lässt sich somit eine Schrägstellung des Schrägstellers 1 folgendermaßen erreichen. In einer Ausgangsposition ist der Schrägsteller 1 geöffnet, dass heißt, die Flügelschraube 41 ist nicht festgestellt. Nachdem das Befestigungselement 3 und das Schrägestellelement 2 mit den vorgesehenen Komponenten gekoppelt sind, wird durch Verdrehen des Schrägstellelements 2 um das Verbindungsmittel 4 der gewünschte Neigungswinkel des Schrägstellelements 2 eingestellt. Ist der Winkel erreicht, wird die Flügelschraube 41 festgeschraubt. Dadurch wird der Bolzenabschnitt 46 des Verbindungsmittels 4 durch den Gewindeeingriff der Flügelschraube 41 in Richtung der Flügelschraube 41 gezogen.

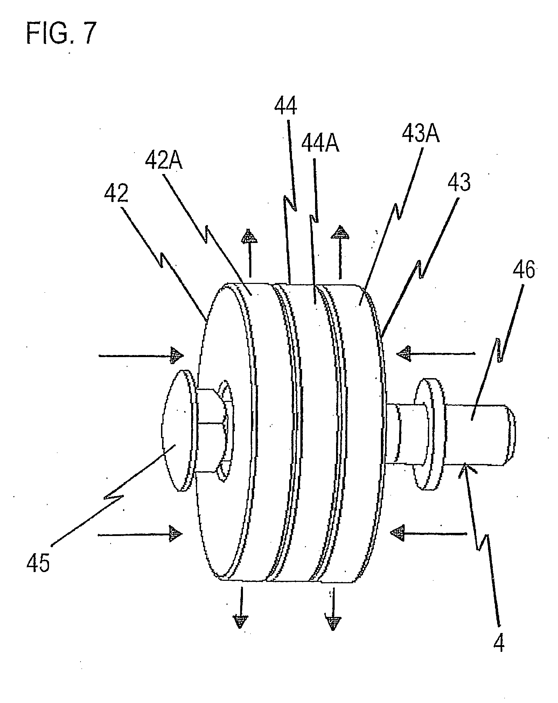

Durch den Kopfabschnitt 45 des Verbindungsmittels 4 als Widerlager wird die Kraft der Flügelschraube 41 auf die Druckschale 21 übertragen. Dadurch wird die Druckschale 21 Richtung der Flügelschraube und folglich auch in Richtung der Druckschale 31 gedrängt. Verringert sich der Abstand zwischen den Druckschalen 21, 31, so kommt das Drängmittel 35 in Kontakt mit der Reibscheibe 43. Analoges geschieht in der Druckschale 21 des Schrägstellelements 2. Durch die drängende Kraft, die dann durch das Drängmittel 35 auf die Reibscheibe 43 ausgeübt wird, wird die Reibscheibe in einer axialen Richtung, also der Kraftrichtung, komprimiert und dehnt sich in radialer Richtung aus. Dies ist in Fig. 7 mit den dargestellten Pfeilen gezeigt. So kommt es zu einem zuverlässigen Kraftschluss zwischen Reibscheibe 43 und der Druckschalenflanke 33 der Druckschale 31. Zudem wird eine Rotation der Reibscheiben 42, 43, 44 um das Verbindungsmittel 4 aufgrund desselben Effekts verhindert.

Zusammenfassend umfasst ein Schrägsteller 1 für einen Ständer, insbesondere einen Beckenständer, zwei relativ zueinander bewegbare Bauteile 2, 3, ein Verbindungsmittel 4, das die bewegbaren Bauteile 2, 3 miteinander verbindet, ein Feststellmittel 41, zum reversiblen Fixieren der Position der bewegbaren Bauteile 2, 3 zueinander, sowie wenigstens ein Reibmittel 42, 43, 44, das zwischen den bewegbaren Bauteilen 2, 3 angeordnet ist. Das Reibmittel 42, 43, 44 ist dabei in einer fixierten Position des Feststellmittels 41 in Reibkontakt mit einer Umfangsfläche 33 wenigstens eines der bewegbaren Bauteile 2, 3.

Derartige Schrägsteller sind natürlich auch in anderen Anwendungsgebieten einsetzbar und damit nicht auf Musikinstrumentenständer im Allgemeinen und Beckenständer im Besonderen beschränkt. So sind Anwendungen auch im Werkstatt- oder Laborbereich denkbar, wo ein zuverlässiger Halt von Einsatzmitteln an einer Strebe notwendig ist.

### Bezugszeichenliste

- 1: Schrägsteller
- 2: Schrägstellelement
- 3: Befestigungselement
- 4: Verbindungsmittel
- 21: Druckschale
- 22: Instrumentaufnahme
- 31: Druckschale
- 32: Strebenaufnahme
- 33: Druckschalenflanke
- 34: Fixiermittel
- 35: Drängmittel
- 35A: Öffnung
- 41: Flügelschraube
- 42: Reibscheibe
- 42A: Umfangsreibfläche
- 43: Reibscheibe
- 43A: Umfangsreibfläche
- 44: Reibscheibe
- 45: Kopfabschnitt
- 46: Bolzenabschnitt

## Patentansprüche

1. Schrägsteller mit zwei relativ zueinander bewegbaren Bauteilen (2, 3), einem Verbindungsmittel (4), das die bewegbaren Bauteile (2, 3) miteinander verbindet, wenigstens einem Feststellmittel (41), zum reversiblen Fixieren der Position der bewegbaren Bauteile (2, 3) zueinander, sowie wenigstens einem Reibmittel (42, 43, 44), das zwischen den bewegbaren Bauteilen (2, 3) angeordnet ist, wobei das Reibmittel (42, 43, 44) in einer fixierten Position des Feststellmittels (41) in Reibkontakt mit einer radialen Umfangfläche (33) wenigstens eines der bewegbaren Bauteile (2, 3) ist, wobei
das Reibmittel (42, 43, 44) eine Mehrzahl von Reibscheiben aufweist; **dadurch gekennzeichnet, dass**
die Reibscheiben in einer fixierten Position des Feststellmittels in Reibkontakt miteinander sind.

2. Schrägsteller gemäß Anspruch 1, **dadurch gekennzeichnet, dass** eines der bewegbaren Bauteile ein Schrägstellelement (2) und das andere bewegbare Bauteil ein Befestigungselement (3) ist.

3. Schrägsteller gemäß Anspruch 1, **dadurch gekennzeichnet, dass** die bewegbaren Bauteile baugleich, insbesondere beide ein Befestigungselement (3), sind.

4. Schrägsteller gemäß einem der vorhergehenden Ansprüche, **dadurch gekennzeichnet, dass** der innere Aufbau der bewegbaren Bauteile (2, 3) baugleich, insbesondere symmetrisch, ist.

5. Schrägsteiler gemäß einem der vorhergehenden Ansprüche, **dadurch gekennzeichnet, dass** das Reibmittel (42, 43, 44) elastisch verformbar ist.

6. Schrägsteller gemäß einem der vorhergehenden Ansprüche, **dadurch gekennzeichnet, dass** das Reibmittel (42, 43, 44) derart ausgebildet ist, dass es durch eine axiale Kompressionskraft eine radiale, insbesondere eine konzentrische, reversible Expansion erfährt.

7. Schrägsteller gemäß einem der Ansprüche 1 bis 6, **dadurch gekennzeichnet, dass** bei einer Mehrzahl von Reibscheiben zwischen wenigstens zwei Reibscheiben (42, 43) eine starre Scheibe (44) vorgesehen ist.

8. Schrägsteller gemäß einem der vorhergehenden Ansprüche, **dadurch gekennzeichnet, dass** die bewegbaren Bauteile (2, 3) und das Reibmittel (42, 43, 44) radial um das Verbindungsmittel (4) angeordnet sind und dass das Reibmittel (42, 43, 44) in einer fixierten Position des Feststellmittels (41) in Kontakt mit einem Drängmittel (35) wenigstens eines der bewegbaren Bauteile (2, 3) ist.

9. Schrägsteller gemäß einem der vorhergehenden Ansprüche, **dadurch gekennzeichnet, dass** das Reibmittel (42, 43, 44) ein thermoplastisches Elastomermaterial aufweist.

10. Schrägsteller gemäß einem der vorhergehenden Ansprüche, **dadurch gekennzeichnet, dass** wenigstens eines der bewegbaren Bauteile (2, 3), und/oder das Reibmittel (42, 43, 44) und/oder die starre Scheibe (44) zumindest teilweise an einer entsprechenden Kontaktfläche (33, 42A, 43A, 44A) ein Oberflächenprofil aufweist.

11. Schrägsteller gemäß einem der vorhergehenden Ansprüche, **dadurch gekennzeichnet, dass** das Verbindungsmittel (4) einen Bolzenabschnitt (46), der sich durch die bewegbaren Bauteile und das Reibmittel (42, 43, 44) erstreckt, der einen Gewindeabschnitt aufweist, und eine zu dem Gewindeabschnitt korrespondierende Mutter (41), vorzugsweise eine Flügelmutter, zum Feststellen des Schrägstellers (1) aufweist.

12. Ständer, insbesondere Beckenständer, mit einem Schrägsteller (1) gemäß einem der vorhergehenden Ansprüche.

## Claims

1. Tilter with two structural elements (2, 3) which are movable with respect to each other, with a connection means (4) connecting the movable structural elements (2, 3) to each other, with at least one arresting element (41) for reversibly fixating the position of the movable structural elements (2, 3) with respect to each other, and with at least one friction means (42, 43, 44) arranged between the movable structural elements (2, 3) wherein, in a fixed position of the arresting element (41), the friction means (42, 43, 44) is in a frictional contact with a radial circumferential surface (33) of at least one of the movable structural elements (2, 3) and wherein the friction means (42, 43, 44) comprises a plurality of friction discs; **characterised in that**,
in a fixed position of the arresting element, the friction discs are in a frictional contact with each other.

2. Tilter according to claim 1, **characterised in that** one of the movable structural elements is a tilting element (2) and the other movable structural element is a fixing element (3).

3. Tilter according to claim 1, **characterised in that** the movable structural elements are structurally identical, in particular both are fixing elements (3).

4. Tilter according to one of the preceding claims, **characterised in that** the inner structures of the movable structural elements (2, 3) are structurally identical, in particular symmetrical.

5. Tilter according to one of the preceding claims, **characterised in that** the friction means (42, 43, 44) is elastically deformable.

6. Tilter according to one of the preceding claims, **characterised in that** the friction means (42, 43, 44) is implemented in such a way that by an axial compression force it undergoes a radial expansion, in particular a concentric reversible radial expansion.

7. Tilter according to one of claims 1 to 6, **characterised in that**, in case of a plurality of friction discs, a rigid disc (44) is provided between at least two friction discs (42, 43).

8. Tilter according to one of the preceding claims, **characterised in that** the movable structural elements (2, 3) and the friction means (42, 43, 44) are arranged radially around the connection means (4) and that, in a fixed position of the arresting means (41), the friction means (42, 43, 44) is in contact with an urging means (35) of at least one of the movable structural elements (2, 3).

9. Tilter according to one of the preceding claims, **characterised in that** the friction means (42, 43, 44) comprises a thermoplastic elastomer material.

10. Tilter according to one of the preceding claims, **characterised in that** at least one of the movable structural elements (2, 3) and/or the friction means (42, 43, 44) and/or the rigid disc (44) at least partially comprises a surface profile at a corresponding contact area (33, 42A, 43A, 44A).

11. Tilter according to one of the preceding claims, **characterised in that** the connection means (4) has a bolt section (46), which extends through the movable structural elements and through the friction means (42, 43, 44) and comprises a threaded section, and comprises a nut (41), preferably a wing nut, corresponding to the threaded section and provided for arresting the tilter (1).

12. Stand, in particular cymbal stand, with a tilter (1) according to one of the preceding claims.

## Revendications

1. Dispositif d'inclinaison avec deux éléments structurels (2, 3) mouvables l'un relativement à l'autre, avec un élément connectif (4) joignant les éléments structurels (2, 3) mouvables l'un à l'autre, avec au moins un élément de blocage (41) pour une fixation réversible de la position des éléments structurels (2, 3) l'un relativement à l'autre, et avec au moins un moyen de friction (42, 43, 44) disposé entre les éléments structurels (2, 3) mouvables, le moyen de friction (42, 43, 44) étant, dans une position fixée de l'élément de blocage (41), en contact à friction avec une surface circonférentielle (33) radiale d'au moins un des éléments structurels (2, 3) mouvables, et le moyen de friction (42, 43, 44) comportant une pluralité des disques de friction ;
**caractérisé en ce que**,
dans une position fixée de l'élément de blocage, les disques de friction sont en contact à friction l'un avec l'autre.

2. Dispositif d'inclinaison selon la revendication 1, **caractérisé en ce qu'** un des éléments structurels mouvables est un élément d'inclinaison (2) et l'autre élément structurel mouvable est un élément de fixation (3).

3. Dispositif d'inclinaison selon la revendication 1, **caractérisé en ce que** les éléments structurels mouvables sont de construction identique, notamment les deux sont des éléments de fixation (3).

4. Dispositif d'inclinaison selon l'une quelconque des revendications précédentes, **caractérisé en ce que** la construction intérieure des éléments structurels (2, 3) mouvables est de construction identique, notamment symétrique.

5. Dispositif d'inclinaison selon l'une quelconque des revendications précédentes, **caractérisé en ce que** le moyen de friction (42, 43, 44) est déformable élastiquement.

6. Dispositif d'inclinaison selon l'une quelconque des revendications précédentes, **caractérisé en ce que** le moyen de friction (42, 43, 44) est implémenté de telle manière qu'il subit, par une force de compression axiale, une expansion radiale, en particulier concentrique et réversible.

7. Dispositif d'inclinaison selon l'une quelconque des revendications 1 à 6, **caractérisé en ce que**, s'il y a une pluralité des disques de friction, un disque rigide (44) est prévu entre au moins deux disques de friction (42, 43).

8. Dispositif d'inclinaison selon l'une quelconque des revendications précédentes, **caractérisé en ce que** les éléments structurels (2, 3) mouvables et le moyen de friction (42, 43, 44) sont disposés autour de l'élément connectif (4) de façon radiale et que, dans une position fixée de l'élément de blocage (41), le moyen de friction (42, 43, 44) est en contact avec un moyen de poussage (35) d'au moins un des éléments structurels (2, 3) mouvables.

9. Dispositif d'inclinaison selon l'une quelconque des revendications précédentes, **caractérisé en ce que** le moyen de friction (42, 43, 44) comporte un matériau d'élastomère thermoplastique.

10. Dispositif d'inclinaison selon l'une quelconque des revendications précédentes, **caractérisé en ce qu'**au moins un des éléments structurels (2, 3) mouvables et/ou le moyen de friction (42, 43, 44) et/ou le disque rigide (44) comporte au moins partiellement un profile superficiel à une surface de contact (33, 42A, 43A, 44A) correspondante.

11. Dispositif d'inclinaison selon l'une quelconque des revendications précédentes, **caractérisé en ce que** l'élément connectif (4) comporte une section de boulon (46) s'étendant à travers des éléments structurels mouvables et le moyen de friction (42, 43, 44) comprenant une section filetée et comprenant un écrou (41), préférentiellement un écrou papillon, lequel correspond à la section filetée et est prévu pour bloquer le dispositif d'inclinaison (1).

12. Support, en particulier support de cymbale, avec un dispositif d'inclinaison (1) selon l'une quelconque des revendications précédentes.
